# EUROPEAN PATENT SPECIFICATION

(11) **EP 2 670 018 B1**
(45) Date of publication and mention of the grant of the patent: **26.06.2019**
(21) Application number: 11857095.1
(22) Date of filing: 26.01.2011
(51) Int. Cl.: H02J 7/00, H01M 10/44, H01M 10/48, B60L 1/00, B60L 3/00, B60L 15/20, H01M 10/42, B60L 53/00, B60L 58/00, B60L 50/00, B60L 53/14, B60L 50/51, B60L 58/19, B60L 58/12, B60L 58/13, B60L 58/21, B60L 58/22

(54) **ELECTRIC VEHICLE BATTERY SYSTEM**
BATTERIESYSTEM FÜR ELEKTROFAHRZEUGE
SYSTÈME DE BATTERIE DE VÉHICULE ÉLECTRIQUE

(43) Date of publication of application: 04.12.2013
(73) Proprietor: Hitachi, Ltd., Tokyo 100-8280 (JP)
(72) Inventor: INABA, Ryou, Hitachi-shi Ibaraki 319-1292 (JP); TASHIRO, Naoyuki, Hitachi-shi Ibaraki 319-1292 (JP); YAMAOKA, Shiro, Hitachi-shi Ibaraki 319-1292 (JP)
(74) Representative: Matias, Bruno M.
(86) International application number: PCT/JP2011/051442
(87) International publication number: WO 2012/101771

(56) References cited:
- EP-A2- 1 837 944
- WO-A1-2010/018644
- WO-A1-2010/109872
- JP-A- 9 037 477
- JP-A- 2003 061 261
- JP-A- 2007 259 612
- JP-A- 2010 088 196
- JP-A- 2010 232 106

## Description

### Technical Field

The present invention relates to an electric vehicle power storage system and, more specifically, to an electric vehicle power storage system including a plurality of power storage element rows connected in parallel.

### Background Art

In electric vehicles (such as hybrid vehicles, electric automotive vehicles) using a motor as a part of a drive source of an automotive vehicle, a high-capacity battery is mounted as a power supply source. In order to reduce an environmental load, elongation of a driving distance only with a motor instead of an internal combustion engine is required. In order to do so, achievement of high capacity of the battery is essential. When the battery cells (hereinafter, referred to as a power storage element) achieving high capacity are connected in series to form a power storage element row, there arises a problem that power supply to the motor is stopped on the basis of the consideration of safety if temperature variations occur among the power storage elements in the power storage element row or an output due to a malfunction of even one battery cell in the power storage element row lowers. Accordingly, a system in which a plurality of power storage element rows are connected in parallel for achieving high capacity (hereinafter, referred to as a parallel connection power storage system) is developed.

When part of the power storage elements suffers a malfunction, the parallel connection power storage system is capable of countering the problem of stoppage of power supply to the motor by disconnecting only the power storage element row to which the malfunctioning power storage element belongs . Also, since only the power storage element row including the malfunctioning power storage element is replaced, reduction of a battery cost at the time of replacement of the battery is achieved.

However, in the parallel connection power storage system in which the power storage element rows are connected in parallel, variations in amount of electric charge or internal resistance may occur among the power storage elements due to a leak current caused by abnormal wiring, replacement with a new battery or the like, which causes a difference in voltage among the power storage element rows and a current (cross current) flows among the power storage element rows according to the voltage difference. When a cross current no lower than an allowable current determined by the power storage element is generated, abnormal heat generation or service life deterioration may result. When variations in amount of charge exist among the power storage element rows, timing of reaching a lower limit value of a range of usage of the power storage element varies from one power storage element row to another, and hence there may arise a problem that the power supply to the motor is limited by the power storage element row whose output is lowered most.

In order to solve the above-described problem, a method of controlling currents of the power storage element rows by providing current control elements respectively on the power storage element rows so as not to cause an excessive cross current among the power storage element rows or temperature variations among the power storage elements is employed in Patent Literature 1. However, since the same number of the current control elements as the number of the power storage element rows need to be installed, the cost of the system is increased. Provision of a switch on each of the power storage element rows and turning ON the switches of the power storage element rows whose voltage differences do not exceed a certain value to prevent problem caused by the cross-current generated at the time of connection are disclosed in Patent Literature 2. However, in Patent Literature 2, since the power storage element row whose remaining level of stored power is lower than other power storage element rows by a predetermined value or more from among the plurality of power storage element rows is disconnected from the parallel power storage element row system, whereby the power that can be supplied to the motor is limited, so that insufficient driving force or the like may occur during the travel.

### Citation List

### Patent Literature

PTL1:JP-A-2010-29015
PTL2: JP-A-2009-33936

EP1837944 A2 relates to an electric power supply control apparatus connected in parallel to plural electric storage means. Plural voltage measurement means are provided which respectively measure the voltages of the plural storage means connected in parallel and plural switching means are provided which respectively disconnect and connect the plural electric storage means from and to the parallel connection.

JP2010232106 A relates to a battery control unit including a battery circuit wherein a plurality of batteries are connected in parallel. A plurality of switches which electrically disconnect each of the batteries connected in parallel from the battery circuit is also described.

### Summary of Invention

### Technical Problem

In the parallel power storage system of the related art, the connecting switch provided on each of the power storage element rows cannot be controlled so as to accommodate a vehicle power requirement calculated from an acceleration operation by a driver during the travel of the electric vehicle and to connect only the required number of power storage element rows on the basis of the voltages, the remaining levels, and chargeable and dischargeable powers of the respective power storage element rows.

### Solution to Problem

To solve the problems the features of the independent claims are suggested. Preferred developments are in the dependent claims. According to a first mode, there is provided an electric vehicle power storage system provided with a plurality of power storage element rows composed of a plurality of power storage elements connected in series and mounted on an electric vehicle including: a parallel connecting switch configured to select the power storage element row and connect the same in parallel, and perform connection and disconnection with respect to an electric load mounted on the electric vehicle from one power storage element row to another; a parallel connection switch controller configured to control the parallel connection switch; a vehicle power requirement calculating unit configured to calculate a vehicle power requirement; a remaining level detecting unit configured to detect a remaining level of the power storage element row; a voltage detecting unit configured to detect a voltage of the power storage element row; and a power storage system control apparatus configured to control the parallel connection switch on the basis of the vehicle power requirement, the remaining level of the power storage element row, and the voltage of the power storage element row.

According to a second mode of the present invention, in the electric vehicle power storage system of the first mode, it is preferable that the parallel connection switch controller connects the power storage element rows to the electric load in the descending order in terms of the remaining level when the vehicle power requirement is equal to or larger than zero, and when the vehicle power requirement is smaller than zero, the power storage element rows are connected to the electric load in the ascending order in terms of the remaining level.

According to a third mode of the present invention, in the electric vehicle power storage system of the second mode, it is preferable that the power storage element row to be connected to the electric load is selected from among the power storage elements in which a difference between a total voltage of the power storage elements row connected to the electric load already and the voltage of the power storage element row is smaller than a predetermined value.

According to a fourth mode of the present invention, in the electric vehicle power storage system of the third mode, it is preferable that the power storage element row to be connected to the electric load is selected from among the power storage element rows whose remaining levels of the power storage element row to be connected are larger than a predetermined lower limit value when the vehicle power requirement is larger than zero, and is selected from among the power storage element rows whose remaining levels of the power storage element row to be connected are smaller than a predetermined upper limit value when the vehicle power requirement is smaller than zero.

According to a fifth mode of the present invention, in the electric vehicle power storage system of the first mode, it is preferable that the parallel connection switch controller connects the power storage element rows by the number of required connections of power storage element row or less to the electric load on the basis of the vehicle power requirement and a chargeable and dischargeable power of the power storage element rows, when the vehicle power requirement is other than zero and the vehicle speed is other than zero.

According to a sixth mode of the present invention, in the electric vehicle power storage system of the fifth mode, it is preferable that the chargeable and dischargeable power of the power storage element row is calculated on the basis of a current that the power storage element row can flow and a total output voltage of the entire power storage element rows connected to the electric load.

According to a seventh mode of the present invention, in the electric vehicle power storage system of the first mode, it is preferable that the vehicle power requirement calculating unit calculates the vehicle power requirement using the vehicle power requirement and a air-conditioning power requirement.

According to an eighth mode of the present invention, in the electric vehicle power storage system of the seventh mode, it is preferable that a torque requirement calculating unit configured to calculate a torque requirement of a driver on the basis of amounts of pressing of an accelerator pedal and a brake pedal by the driver, and number of motor revolutions detecting unit configured to detect the number of motor revolutions are provided, and the vehicle power requirement is calculated by the power storage system control apparatus on the basis of the torque requirement by the driver and the number of motor revolutions.

According to a ninth mode of the present invention, in the electric vehicle power storage system of the seventh mode, it is preferable that the air-conditioning power requirement is calculated by using at least one of a set temperature of an air-conditioning apparatus, a cabin temperature, and a vehicle speed.

According to a tenth mode of the present invention, in the electric vehicle power storage system of the seventh mode, when the vehicle power requirement is other than zero and the vehicle speed is other than zero, the air-conditioning power requirement is set to be smaller as a variance of the remaining level of the entire power storage element rows increases.

According to an eleventh mode of the present invention, in the electric vehicle power storage system of the seventh mode, it is preferable that when the vehicle power requirement is zero and the vehicle speed is zero, and when the difference between the set temperature of the air-conditioning apparatus and the cabin temperature is within a predetermined value, the air-conditioning power requirement is set to be larger as a remaining level difference among the power storage element rows increases.

### Advantageous Effects of Invention

The parallel connection power storage system of the invention is capable of supplying power optimal to the vehicle power requirement required by the electric vehicle and preventing variations in remaining level among the power storage element rows while preventing lowering of traveling performances of the electric vehicle.

### Brief Description of Drawings

Fig. 1 is a block diagram for explaining a general configuration of an electric vehicle provided with a parallel connection power storage system of a first embodiment according to the present invention.
Fig. 2 is a schematic block diagram illustrating a control system of the entire electric vehicle in Fig. 1.
Fig. 3 is a block diagram for explaining a configuration of the parallel connection power storage system according to a first embodiment of the present invention.
Fig. 4 is a flowchart illustrating a control process flow of the parallel connection power storage system for the electric vehicle of the first embodiment of the invention.
Fig. 5 is a drawing for explaining indexing to the respective power storage element rows of the parallel connection power storage system according to the first embodiment of the present invention.
Fig. 6 is a flowchart illustrating a process flow of the parallel connection power storage system at the time of power running of the electric vehicle illustrated in Fig. 1.
Fig. 7 is a flowchart illustrating a process flow of the parallel connection power storage system at the time of regeneration of the electric vehicle in Fig. 1.
Fig. 8 is a flowchart illustrating an output enable torque calculation flow of the parallel connection power storage system according to the first embodiment of the invention.
Fig. 9 is a drawing illustrating examples of a vehicle torque requirement, remaining levels of the respective power storage element rows, and connecting states among the respective power storage element rows when the electric vehicle according to the first embodiment of the present invention is travelled.
Fig. 10 is a flowchart illustrating a control flow of the parallel connection power storage system for the electric vehicle according to a second embodiment of the present invention.
Fig. 11 is a graph illustrating a relationship between an air-conditioning power command value and a power storage element row variance in the electric vehicle provided with the parallel connection power storage system according to the second embodiment of the present invention.
Fig. 12 is a flowchart illustrating a control flow of an air-conditioning power during a stop of the electric vehicle provided with the parallel connection power storage system according to the second embodiment of the present invention.
Fig. 13 is a graph illustrating a relationship between a target value of the air-conditioning power and a difference in remaining level among the power storage element rows during the stop of the electric vehicle provided with the parallel connection power storage system according to the second embodiment of the present invention.
Fig. 14 is a graph illustrating a relationship between the air-conditioning power command value and a temperature difference in the electric vehicle provided with the parallel connection power storage system according to the second embodiment of the present invention.

### Description of Embodiment

### <First Embodiment>

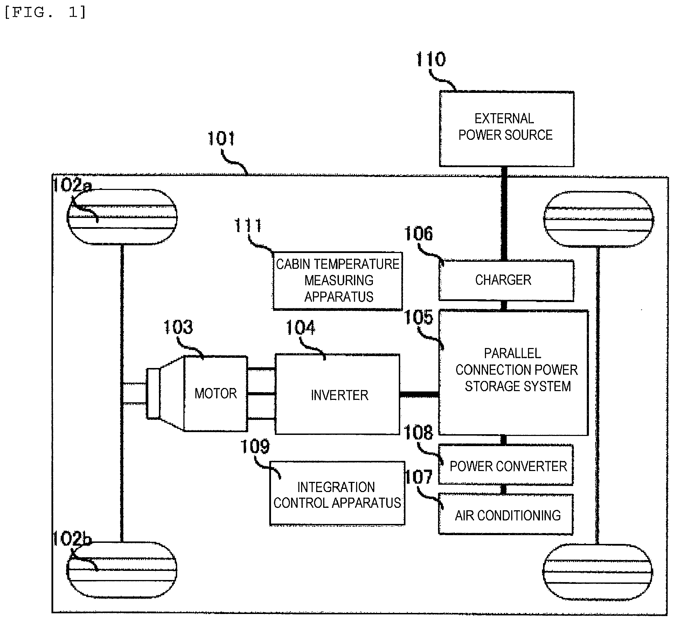

Fig. 1 is a general view illustrating a general configuration of an electric vehicle 101 provided with a parallel connection power storage system according to a first embodiment of the present invention. The electric vehicle 101 includes a motor 103 for traveling configured to output a drive force to drive wheels 102a, 102b, an inverter 104 configured to control the drive force of the motor 103, a parallel connection power storage system 105 configured to supply power to the motor 103 via the inverter 104, a charger 106 configured to convert the power supplied from an external power source in order to charge power storage elements in the parallel connection power storage system 105, an air-conditioning apparatus 107, a power converter 108 configured to transform the power of the parallel connection power storage system 105 to a voltage which can be used by air-conditioning apparatus 107, a cabin temperature measuring apparatus 111 configured to be capable of measuring a cabin temperature of the electric vehicle 101, and an integration control apparatus 109 configured to control the electric vehicle 101.

The inverter 104 is configured as an inverter circuit having six semiconductor switching elements, for example, converts a DC power supplied from the parallel connection power storage system 105 by switching of the semiconductor switching element into a three-phase AC power, and then supplies power to a three-phase coil of the motor 103. The motor 103 includes a sensor (not illustrated) configured to measure the number of revolutions of the motor mounted thereon.

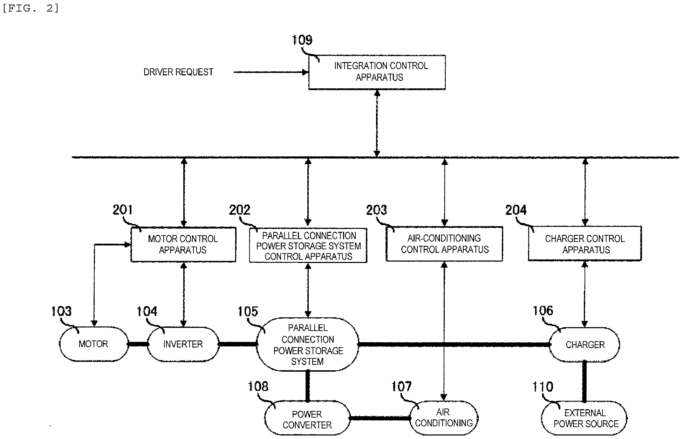

Subsequently, the integration control apparatus 109 configured to control the electric components described above will be described with reference to Fig. 2. Fig. 2 is a block diagram of a control system of the entire electric vehicle.

The control system of the entire electric vehicle includes a motor control apparatus 201 configured to control the inverter 104 and the motor 103, a parallel connection power storage system control apparatus 202 configured to control the parallel connection power storage system 105, an air-conditioning control apparatus 203 configured to control the air-conditioning apparatus 107, and a charger control apparatus 204 configured to control the charger 106 and, in addition, includes the integration control apparatus 109 configured to integrally control the above-described control apparatuses.

The motor control apparatus 201 calculates a current command value on the basis of a torque command value from the integration control apparatus 109 and the number of revolutions of the motor or the like and the inverter 104 performs the switching on the basis of the current command value and the voltage of the parallel connection power storage system 105. The parallel connection power storage system control apparatus 202 will be described later. The charger control apparatus 204 issues a command to the charger 106 to convert the power supplied from an external power source 110 into desired voltage and current.

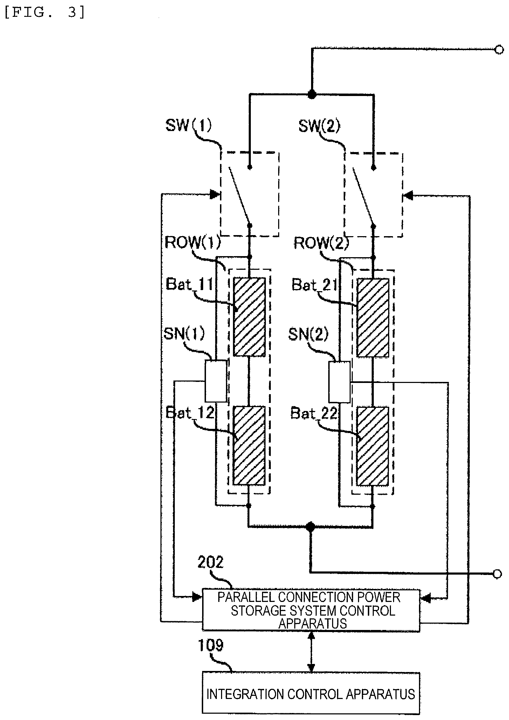

Subsequently, an example of the internal structure of the parallel connection power storage system 105 will be described with reference to Fig. 3.

The parallel connection power storage system 105 includes a plurality (N) of power storage element rows (ROW (1) to ROW (N)), and each of the power storage element rows is composed of a plurality of power storage elements (Bat). For example, in the example illustrated in Fig. 3, the parallel connection power storage system 105 includes two of the power storage element rows, and the ROW (1) is composed of two power storage elements Bat_11, Bat_12 connected in series.

N rows of power storage element rows ROW are arranged in parallel (two parallel rows of ROW(1) and ROW(2) in Fig. 3), and parallel connecting switches SW (1) to SW (N) are connected to the power storage element rows ROW (1) to ROW (N) in series respectively. The power storage elements Bat must only be a secondary battery which can be charged and discharged. For example, nickel hydride batteries or lithium ion batteries are contemplated. Power storage element row state detecting apparatuses SN(1) to SN (N) being capable of detecting voltages, remaining battery levels, and chargeable and dischargeable powers of the respective rows are connected to ROW (1) to ROW (N), and detection signals thereof are transmitted to the parallel connection power storage system control apparatus 202. Here, the chargeable and dischargeable powers of the power storage element rows are calculated on the basis of an electric current that the power storage element row can pass and a total voltage of the power storage element row and, in this example, means an upper limit value of the power that the power storage element row can charge and discharge at that moment.

The parallel connection power storage system control apparatus 202 performs control of SW (1) to SW (N) on the basis of a signal from the integration control apparatus 109. The switch controls of these switches by the integration control apparatus 109 are performed by sending parallel connecting switch flag F_SW (1) to F_SW (N) as flags to turn the switches ON/OFF from the integration control apparatus 109 to the parallel connection power storage system control apparatus 202. However, F_SW(j) = 1 or 0 (j = natural numbers from 1 to N), that is, it means that the switch SW (j) is turned ON when F_SW(j) = 1 is established, and the switch SW(j) is turned OFF when the F_SW(j) = 0 is established. Hereinafter, this signal is referred to as a parallel connecting switch flag. The parallel connection power storage system control apparatus 202 performs ON-OFF operation of SW (1) to SW (N) upon reception of the parallel connection switch flag from the integration control apparatus 109.

By turning the switches SW (1) to SW (N) ON, the power storage element rows ROW (1) to ROW (N) are connected to a electric load (inverter 104), and the inverter 104 converts DC power from the power storage element row ROW connected thereto to three-phase AC power and supplies the same to the motor 103.

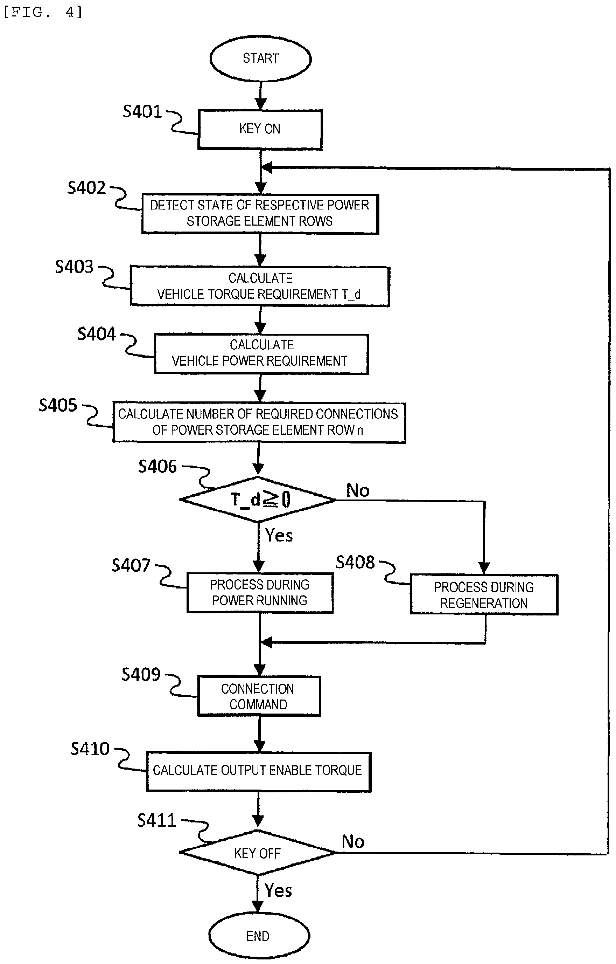

Subsequently, an operation of the electric vehicle 101 of the embodiment, in particular, an operation of the parallel connection power storage system 105 during the travel of the vehicle will be described with reference to Figs. 4 to 8. Here, the term "during travel of the vehicle" means a state from key ON to key OFF. Upon the key ON of the electric vehicle (Step S401), the parallel connection power storage system 105 of the electric vehicle is controlled according to a flowchart in Fig. 4 while the key ON state is continued. After the Key ON, in detection of the state of the respective power storage element row in Step S402, the voltage, the remaining level, and the chargeable and dischargeable power of the power storage element row ROW are detected by the power storage element rows state detecting apparatuses SN(1) to SN (N). In calculation of a vehicle torque requirement T_d in Step S403, calculation of the vehicle torque requirement is performed according to the amounts of pressing of an acceleration pedal and a brake pedal by a driver. Then, in calculation of the vehicle power requirement in Step S404, power (drive power requirement) required for outputting the vehicle torque requirement T_d calculated in Step S403 by a drive motor is calculated from map data stored in the integration control apparatus 109, and the result is determined as a vehicle power requirement.

In calculation of number of required connections of power storage element row n in Step S405, the number of connections of power storage element row n required for satisfying the vehicle power requirement in Step S404 is calculated on the basis of the states of the respective power storage element rows (voltage, remaining battery level, chargeable and dischargeable power). In Step S406, if the vehicle torque requirement T_d is zero or more, the procedure goes to Step S407, where a process during power running is performed. If the vehicle torque requirement T_d is below zero, the procedure goes to Step S408, where a process during regeneration is performed. In Step S409, the power storage element rows set in Step 407 or Step 408 (the method of setting thereof will be described later) are connected. Then, in calculation of output enable torque in Step S410, calculation of output enable torque by the power storage element row connected to loads of motor and an auxiliary machine mounted on the electric vehicle (hereinafter, referred to as an electric load) is performed. Then, in Step S411, whether or not the electric vehicle is in Key OFF is determined and, if not, the procedure goes back to Step S402 again.

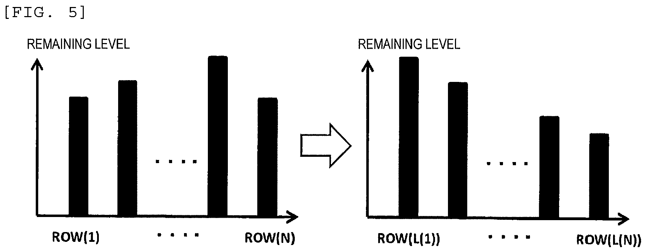

Referring now to Fig. 5, detection of the respective power storage element row state in Step S402 will be described. Indexing of the remaining level is performed on the respective power storage element rows ROW (i) to ROW (N) in the descending order from L (1) to L(N), respectively. In other words, L(1) is the number of the power storage element row having the highest remaining level, and L(N) is the number of the power storage element row having the lowest remaining level. Therefore, the remaining level of the power storage element row ROW (L(k)) having the kth (k is natural numbers from 1 to N) highest remaining level is expressed as "remaining level (L(k))".

In Step S404, the number of required connections of power storage element row n is calculated. First of all, power required for outputting the vehicle torque requirement T_d calculated in Step S404 by the drive motor (drive power requirement) is calculated from the map data stored in the interior of the integration control apparatus 109. Then, the number of the power storage element rows that needs to be connected from ROW (1) to ROW (N) for satisfying the drive power requirement is calculated from the voltage, the remaining level, and the chargeable and dischargeable power of the respective power storage element rows ROW (1) to ROW (N) obtained by the detection of the state of the respective power storage element rows in Step S402, and the obtained number is determined as the number of required connections of power storage element row n. In other words, in Step S404, the value n of the sum of the chargeable and dischargeable powers of the L(1) to L(n)^{th} power storage element rows ROW (L(1)) to ROW (L(n)), which becomes the drive power requirement, is determined.

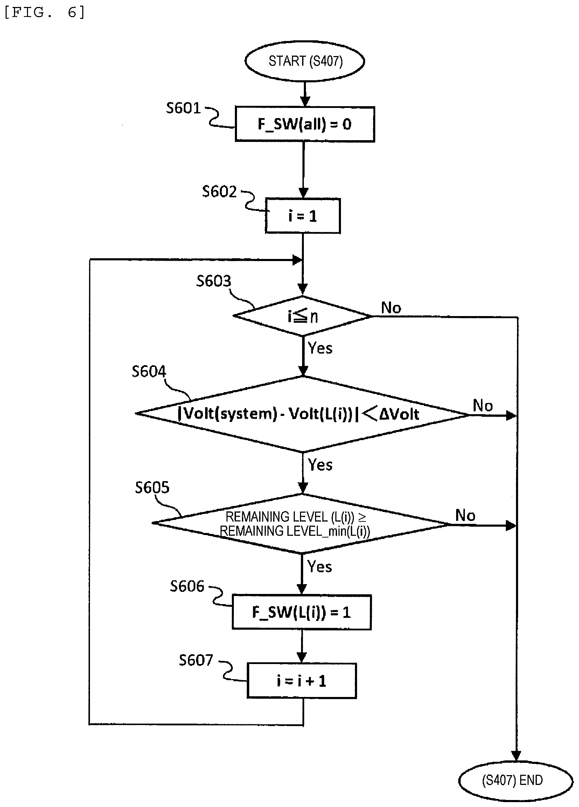

The process during power running in Step S407 in Fig. 4 will be described below. Fig. 6 illustrates a detailed flow of the process in Step S407 in Fig. 4.

When the process during power running is started, in Step S601, all of the parallel connecting switch flags F_SW (1) to F_SW (N) are set to "0". Subsequently, in Step S602, "1" is assigned to a variable i. In Step S603, "i" and "n" calculated in Step S404 are compared and, if i > n, the process in Step S407 is terminated, and if i ≤ n, the procedure goes to Step S604.

In Step S604, a difference between a voltage Volt (system) of the entire parallel connection power storage system 105 connected to the electric load and a voltage volt (L(i)) of the power storage element row ROW (L(i)) is obtained and, if smaller than a predetermined value ΔVolt, the procedure goes to Step S605 and, if equal to or larger than the predetermined value ΔVolt, the process in Step S407 is terminated. The predetermined value ΔVolt is determined by the chargeable and dischargeable power of the power storage element, the internal resistance, and wiring resistance among the power storage element rows. When the voltage of the power storage element rows which are to be connected is different significantly from the voltage Volt(system) of the entire parallel connection power storage system 105, the cross current determined by the voltage difference, the internal resistance, and the wiring resistance is generated among the power storage element rows, and deterioration or heat generation may occur due to the flow of a current exceeding the chargeable and dischargeable power of the power storage element. Therefore, this process is performed in order to prevent such deterioration and heat generation.

In Step S605, the remaining level (L(i)) and remaining level_min (L (i)) determined by the power storage element which constitutes the power storage element row ROW (L(i)) are compared and, if remaining level (L(i)) ≥ remaining level_min(L(i)), the procedure goes to Step S606 and, if remaining level (L(i)) < remaining level_min(L(i)), the process in Step S407 is terminated. Remaining level_min(i) is a lower limit value which can be used by the power storage element row ROW(i), and the state of the plurality of power storage elements which constitute the ROW(i) is detected by a power storage element row state detecting apparatus SN(i) and set by the parallel connection power storage system control apparatus 202 from one power storage element row to another. The Step S605 is a process for prohibiting the power storage element row ROW (L(i)) lower than the lower limit remaining level_min(L(i)) from being connected.

In Step S606, F_SW(L(i)) is set to "1". In other words, a parallel connecting switch flag F_SW(L(i)) is set to "1" from the power storage element row having a high remaining level. In Step S607, i=i+1 is established, and the procedure is returned to Step S603 again.

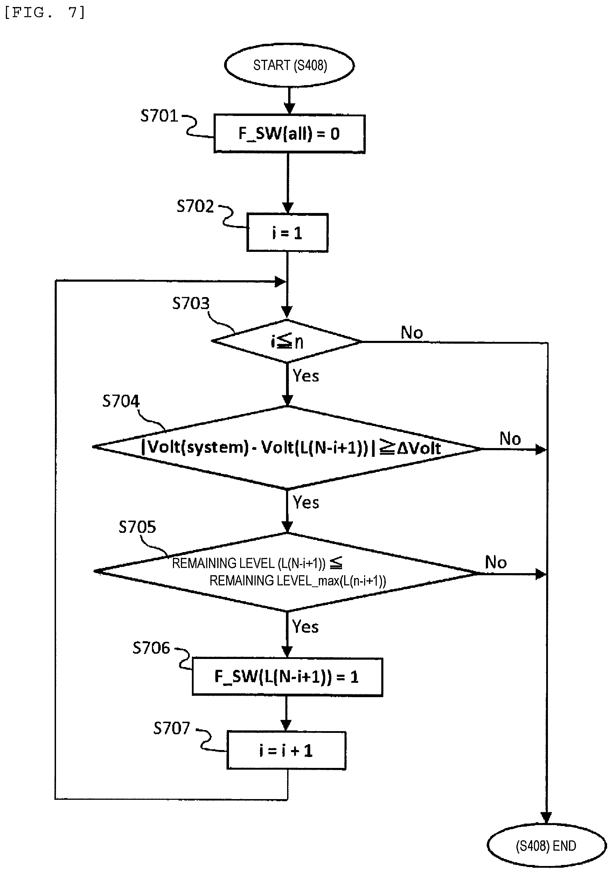

Subsequently, the process during regeneration in Step S408 in Fig. 4 will be described below. Fig. 7 illustrates a detailed flow of the process in Step S408 in Fig. 4.

In the same manner as the process during power running, in Step S601, all of the parallel connecting switch flags F_SW (1) to F_SW (N) are set to "0". Subsequently, in Step S701, "1" is assigned to the variable i. In Step S703, "i" and number of required connections of power storage element row n calculated in Step S404 are compared and, if i > n, the process in Step S408 is terminated, and if i ≤ n, the procedure goes to Step S704.

In Step S704, a difference between the voltage Volt (system) of the entire parallel connection power storage system 105 connected to the electric load (inverter 104) and a voltage volt (L(N-i+1)) of a power storage element row ROW (L (N-i+1)) is obtained and, if smaller than the predetermined value ΔVolt, the procedure goes to Step S705 and, if equal to or larger than the predetermined value ΔVolt, the process in Step S408 is terminated. The predetermined value ΔVolt is determined by the chargeable and dischargeable power of the power storage element, the internal resistance, the wiring resistance among the power storage element rows. In Step S705, a remaining level (L(N-i+1)) and a remaining level_min(L(N-i+1)) determined by the power storage elements which constitute a power storage element row ROW (L(N-i+1)) are compared and, if remaining level (L(N-i+1)) < remaining level_max (L (N-i+1)), the procedure goes to Step S706 and, if remaining level (L(N-i+1)) ≥ remaining level_max(L(N-i+1)), the process in Step S408 is terminated. A remaining level_max(i) is an upper limit value when charging the power storage element row ROW(i), and the state of the plurality of power storage elements which constitute the ROW(i) is detected by the power storage element row state detecting apparatus SN(i) and set by the parallel connection power storage system control apparatus 202 from one power storage element row to another. The Step S705 is a process for prohibiting the power storage element row ROW (L(i)) exceeding the upper limit remaining level_max(L(i)) from being connected.

In Step S706, F_SW(N-i+1) is set to "1". In Step S707, i=i+1 is established, and the procedure is returned to Step S703 again.

Returning back to Fig. 4, when Step S407 or Step S408 described in conjunction with Fig. 6 and Fig. 7 is terminated, the procedure goes to Step S409.

In a connecting command in Step S409, switching of the switches SW (1) to SW (N) with respect to the parallel connection power storage system control apparatus 202 is performed from the integration control apparatus 109 on the basis of the set values of the parallel connecting switch flags F_SW (1) to F_SW (N) in Step S407 or Step S408.

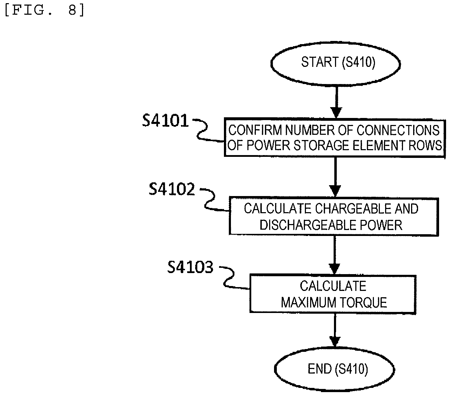

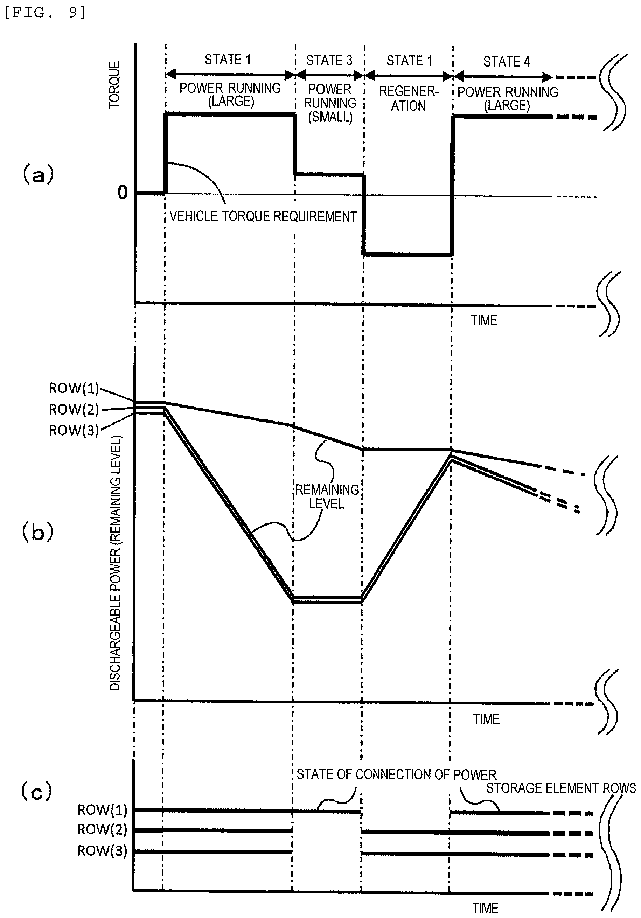

Subsequently, the output enable torque calculation in Step S410 will be described below. Fig. 8 illustrates a detailed flow of the process in Step S410 in Fig. 4. In a confirmation of the number of connections of the power storage element rows ROW (i) to ROW (N) in Step S4101, the currently connected number of connections of the power storage element rows is confirmed. Then, in the calculation of the chargeable and dischargeable power in Step S4102, calculation of power that can be input and output by the power storage element rows in the state of being connected to the electric load is performed on the basis of the battery state obtained by the detection of the states of the respective power storage element rows in Step S402 in Fig. 4. In Step S4103, the highest torque value is calculated on the basis of the power, and the calculated value is transmitted to the integration control apparatus 109. On the basis of the control flowchart in Figs. 4 to 8, examples of the vehicle torque requirement, the remaining levels of the power storage element rows ROW (1) to ROW (3), and the transition of the connected state of the respective power storage element rows when the electric vehicle including the parallel connection power storage system 105 in which three power storage element rows ROW are connected in parallel mounted thereon is travelled are schematically illustrated in Fig. 9.

In Fig. 9(a), the vehicle torque requirement during the travel of the electric vehicle is illustrated, and is divided into states from State 1 to State 4 according to the respective torque requirements. Fig. 9(b) illustrates the transition of the remaining level of the respective power storage element rows ROW (1) to ROW (3). Fig. 9(c) illustrates connecting states of the respective power storage element rows, that is, a period in which the parallel connecting switches SW (1) to SW (3) of these power storage element rows are in a closed state.

At the time of the power running in State 1, a large torque requirement is generated. Because of the influence of the internal resistance or the states of deterioration of the power storage element, the extent of decrease of the remaining level is smaller in ROW (1) than ROW (2) and ROW (3). In State 2, the torque requirement becomes smaller, and only the power storage element row ROW (1) having a high remaining level is connected. Subsequently, since a regenerative torque is generated in State 3, the power storage element rows ROW (2) and ROW (3) having a low remaining level are connected to the electric load (inverter 104), and the power storage element row ROW (1) is disconnected. In State 2 and State 3, variations among the respective power storage element rows are resolved while satisfying the vehicle torque requirement. In State 4, since a large torque requirement is generated again, all the power storage element rows are connected.

For the sake of easy understanding, assuming that the internal resistances of the respective power storage element rows are nearly identical and the remaining levels of the respective power storage element rows ROW (1) to ROW (3) are nearly identical at the time of starting the power running of the vehicle, changes of the remaining levels of the power storage element rows ROW (1) to ROW (3) illustrated in Fig. 9(b) are nearly identical. In other words, for example, a state in which three remaining level change curves of ROW (1) are in proximity to each other is established.

Also, when the internal resistances of the respective power storage element rows are nearly identical, the chargeable power (remaining level) of the power storage element row is proportional to SOC (voltage) of the respective power storage element rows. Therefore, for example, the upper limit remaining level value of the power storage element row in the description given above is proportional to the voltage that overcharges the power storage element row.

An operation of the parallel connection power storage system control apparatus according to the present invention described above, that is, Step 402 to Step S410 of an operation flow illustrated in Fig. 4 may be executed as needed according to the conditions of the vehicle. For example, in a constant speed operating state on an express highway or the like, since there is no change in the vehicle torque requirement, this operation flow is not executed frequently. However, start and stop are frequently performed and the torque requirement therefor changes in the travel in a downtown location, and hence the adjustment of the power storage element row to be connected is needed to be performed finely on the basis of the state of the power storage element row and, for example, it is executed in a cycle of approximately one second.

The execution cycle time of the operation flow as described above may be changed by the driver, and may be changed by estimating the state of traveling from a navigation apparatus, road traffic information, or the like.

### <Second Embodiment>

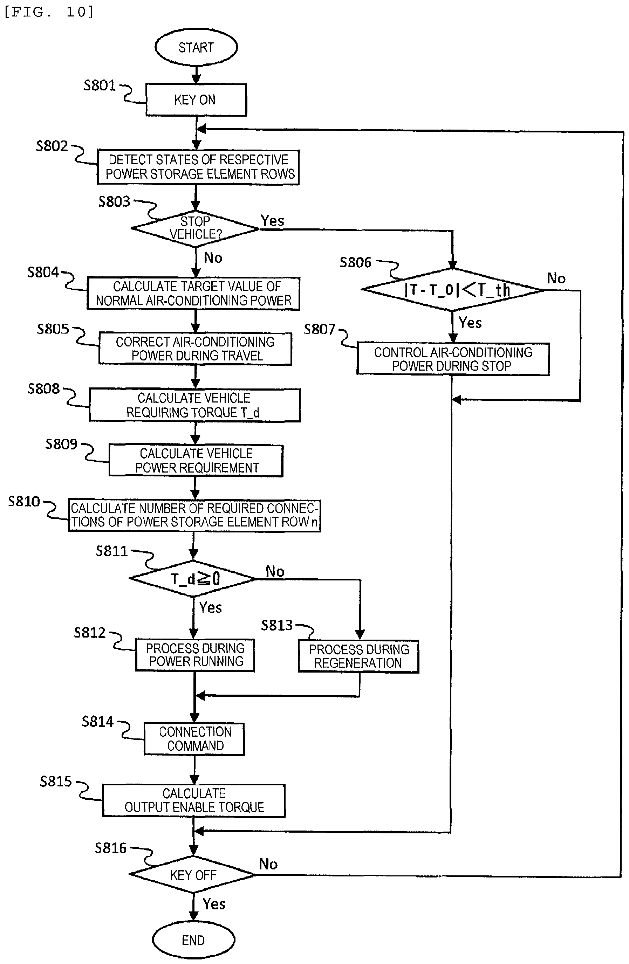

This embodiment is different from the first embodiment in that when the variations of the remaining level among the power storage element rows when the vehicle speed is other than substantially zero are generated by a predetermined value or larger, control to lower a power command value to the air-conditioning apparatus 107 is performed, an air-conditioning power is taken into consideration when calculating the number of required connection of the power storage element rows, and the air-conditioning power is controlled according to the remaining levels of the respective power storage element rows and a set cabin temperature T_0 of the electric vehicle specified by the driver when the vehicle speed is substantially zero. An operation of the parallel connection power storage system 105 during the travel of the vehicle of the embodiment will be described by using flowcharts in Fig. 10 to Fig. 14.

In Fig. 10, since the control of the air-conditioning power is also performed in the second embodiment, Steps S803 to S807 relating to the air-conditioning power are added after Step S802 in comparison with Fig. 4.

In Fig. 10, upon the key ON of the electric vehicle (Step S801), the parallel connection power storage system of the electric vehicle is controlled according to the flowchart in Fig. 10 while the key ON state is continued. After the key ON, in detection of the state of the respective power storage element rows in Step S802, the voltage, the remaining level, and the chargeable and dischargeable power of the power storage element row ROW are detected by the power storage element row state detecting apparatus SN.

Subsequently, whether the vehicle is stopped is determined in Step S803. Here, the term "the vehicle is stopped" means that the vehicle speed is substantially zero and the vehicle torque requirement is substantially zero. When the vehicle is stopped, the procedure goes to Step S806, and in other cases, the procedure goes to Step S804.

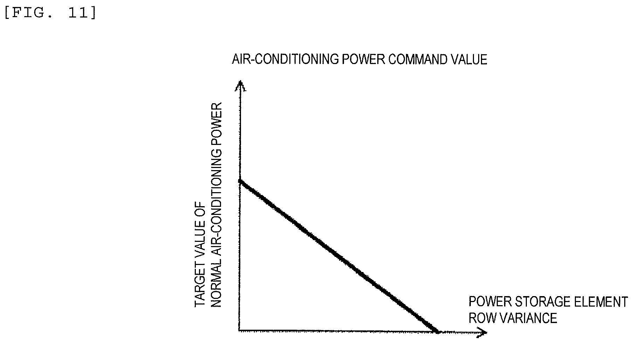

In Step S804, a power required to realize the set cabin temperature T_0 of the electric vehicle specified by the driver (a target value of a normal air-conditioning power) is calculated. Subsequently, in Step S805, the variance of the remaining levels of the respective power storage element rows detected in Step S802 (hereinafter, referred to as a "power storage element row variance" is calculated, the target value of a normal air-conditioning power calculated in Step S804 according to the amount thereof is corrected as illustrated in Fig. 11, an air-conditioning power command value is calculated, and the calculated value is transmitted to the air-conditioning control apparatus 203. The air-conditioning power which can be used when the electric vehicle is stopped may be increased by setting the air-conditioning power command value to be smaller as the power storage element row variance increases, and consequently, the power storage element row variance may be lowered.

In calculation of the vehicle torque requirement T_d in Step S808, calculation of the vehicle torque requirement T_d is performed according to the amounts of pressing of the acceleration pedal and the brake pedal by the driver. Then, in calculation of the vehicle power requirement in Step S809, the sum of drive power required for outputting the air-conditioning power command value calculated in Step S805 and the vehicle torque requirement T_d calculated in Step S808 by the drive motor is calculated as a vehicle power requirement.

In calculation of number of required connections of power storage element row n in Step S810, the number of connections of power storage element row n required for satisfying the vehicle power requirement calculated in Step S808 on the basis of the states of the respective power storage element rows is calculated. In Step S406, if the vehicle torque requirement T_d is zero or more, the procedure goes to Step S811, and if T_d is smaller than zero, the procedure goes to Step S813. A command for switching ROW (1) to ROW (N) is issued by the connecting command in Step S814, and in calculation of the output enable torque in Step S815, calculation of torques which can be output by the power storage element rows SW (1) to SW (n) connected to the electric load is performed. Then, in Step S816, whether or not the electric vehicle is in key OFF is determined and, if not, the procedure goes back to Step S802 again.

In Step S806, when the difference between an electric vehicle cabin temperature T measured by the cabin temperature measuring apparatus 111 and the set cabin temperature T_0 of the electric vehicle specified by the driver is within a predetermined value T_th, the procedure goes to Step S807, and in other cases, the procedure goes to Step S816.

A control of the air-conditioning power during the stop in Fig. 10 will be described below.

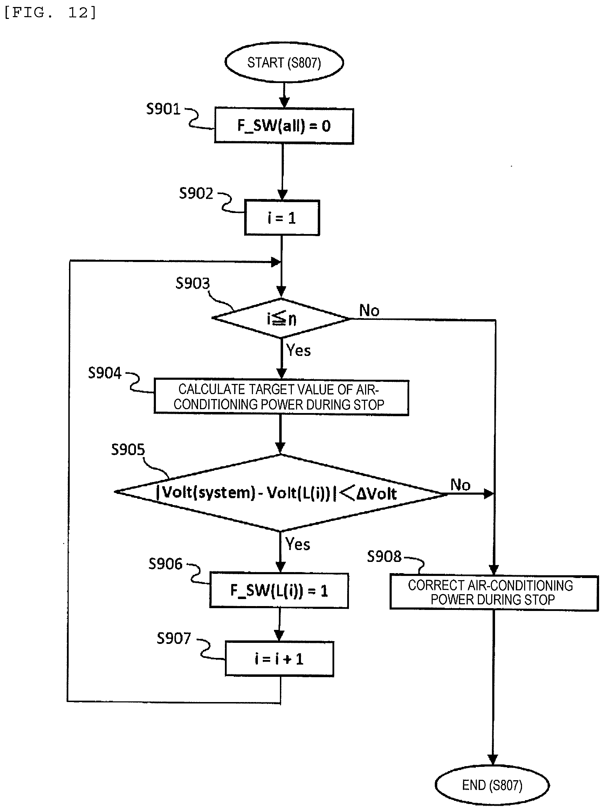

Fig. 12 illustrates a detailed flow of a process in a during-stop air-conditioning power control step S807 in Fig. 10.

From Step S901 to Step S903 are the same processes as the first embodiment (Fig. 6). In Step S903, when i is equal to or smaller than the number of connections of power storage element row n, the procedure goes to Step S904, and in other cases, the procedure goes to Step S908. In calculation of target value of an air-conditioning power command during stop in Step S904, the target value of an air-conditioning power command during stop is determined according to the remaining level difference among the power storage element rows.

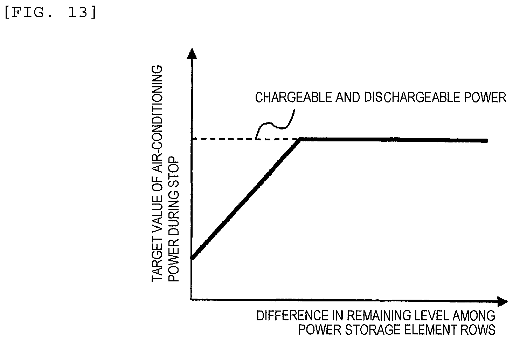

Here, the remaining level difference between the power storage element rows means the difference between the power storage element row currently connected to the electric load and the average remaining level among all of the power storage element rows. Fig. 13 illustrates a relationship between the remaining level difference among the power storage element rows and the target value of an air-conditioning power command during stop. When the remaining level difference among the power storage element rows is large, the target value of an air-conditioning power command during stop is increased up to the chargeable and dischargeable power of the currently connected power storage element row as an upper limit. Accordingly, when there is a remaining level difference among the power storage element rows, by using from the power storage element row having a higher remaining level first for the air-conditioning power, the remaining level difference among the power storage element rows may be resolved in an early stage.

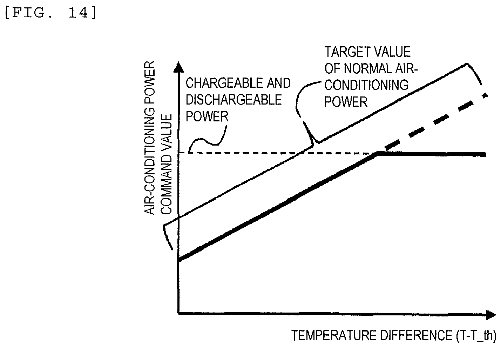

Subsequently, in correction of air-conditioning power during stop in Step S908, the target value of an air-conditioning power command during stop calculated in Step S904 is corrected as illustrated in Fig. 14 according to the difference (temperature difference) between the electric vehicle cabin temperature T measured by the cabin temperature measuring apparatus 111 and the set cabin temperature T_0 set by the driver and is calculated as the air-conditioning power command value. The value is transmitted to the air-conditioning control apparatus 203. The air-conditioning power command value is set so as to be increased with increase in temperature difference with the power (normal air-conditioning power target value) required for realizing the set cabin temperature T_0 of the electric vehicle specified by the driver as a lower limit value and the target value of the air-conditioning power command during stop as an upper limit value. When the temperature difference is reduced to a level lower than a predetermined value, significant deviation of the cabin temperature from the predetermined temperature is prevented by setting the air-conditioning power command value to a small value.

Although a case where this control apparatus is mounted on the integration control apparatus has been described in Example 1 and Example 2, this control apparatus may be mounted on other control apparatuses, such as the parallel connection power storage system control apparatus.

## Claims

1. An electric vehicle power storage system provided with a plurality of power storage element rows (ROW(1) - ROW(N)) composed of a plurality of power storage elements (Bat_11, Bat_12, Bat_21, Bat_22) connected in series and mounted on an electric vehicle (101) comprising:
parallel connecting switches (SW(1) - SW(N)) connected to the power storage element rows (ROW(1) - ROW(N)) in series respectively, wherein the power storage element rows (ROW(1) - ROW(N)) are arranged in parallel, and each parallel connecting switch (SW(1) - SW (N)) is configured to select the respective power storage element row (ROW(1) - ROW(N)) and connect to another power storage element row (ROW(1) - ROW(N)) in parallel, and perform connection and disconnection with respect to loads of a motor and an auxiliary machine mounted on the electric vehicle (101) referred to as electric load
a vehicle power requirement calculating unit configured to calculate a vehicle power requirement;
a remaining level detecting unit configured to detect a remaining level of the power storage element row indicating the chargeable power of the power storage element row (ROW(1) - ROW(N));
a voltage detecting unit configured to detect a voltage of the power storage element row (ROW(1) - ROW(N)); and
a power storage system control apparatus configured to control the parallel connection switch (SW(1) - SW(N)) on the basis of the vehicle power requirement, the remaining level of the power storage element row, and the voltage of the power storage element row (ROW(1) - ROW(N));
wherein the power storage system control apparatus connects the power storage element rows (ROW(1) - ROW(N)) to the electric load in the descending order in terms of the remaining level when the vehicle power requirement is equal to or larger than zero, and
when the vehicle power requirement is smaller than zero, the power storage element rows (ROW(1) - ROW(N)) are connected to the electric load in the ascending order in terms of the remaining level; **characterised in that**
the vehicle power requirement calculating unit calculates the vehicle power requirement using a vehicle power requirement, calculated by the power storage system control apparatus on the basis of a torque requirement by the driver and the number of motor revolutions; and an air-conditioning power requirement, calculated by using at least one of a set temperature of an air-conditioning apparatus (107), a cabin temperature, and a vehicle speed;
the electric vehicle power storage system further comprising a torque requirement calculating unit configured to calculate the torque requirement of a driver on the basis of amounts of pressing of an accelerator pedal and a brake pedal by the driver, and number of motor revolutions detecting unit configured to detect the number of motor revolutions;
wherein when the vehicle power requirement is other than zero and the vehicle speed is other than zero, the air-conditioning power requirement is set to be smaller as a variance of the remaining level of the entire power storage element rows increases.

2. The electric vehicle power storage system according to Claim 1, wherein
the power storage element row (ROW(1) - ROW(N)) to be connected to the electric load is selected from among the power storage elements (Bat_11, Bat_12, Bat_21, Bat_22) in which a difference between a total voltage of the power storage elements row connected to the electric load already and the voltage of the power storage element row is smaller than a predetermined value.

3. The electric vehicle power storage system according to Claim 2, wherein
the power storage element row (ROW(1) - ROW(N)) to be connected to the electric load is selected from among the power storage element rows (ROW(1) - ROW(N)) whose remaining levels of the power storage element row to be connected are larger than a predetermined lower limit value when the vehicle power requirement is larger than zero, and is selected from among the power storage element rows (ROW(1) - ROW(N)) whose remaining levels of the power storage element row (ROW(1) - ROW(N)) to be connected are smaller than a predetermined upper limit value when the vehicle power requirement is smaller than zero.

4. The electric vehicle power storage system according to Claim 1, wherein
the power storage system control apparatus connects the power storage element rows (ROW(1) - ROW(N)) by the number of required connections of power storage element row (ROW(1) - ROW(N)) or less to the electric load on the basis of the vehicle power requirement and a chargeable and dischargeable power of the power storage element rows (ROW(1) - ROW(N)), when the vehicle power requirement is other than zero and the vehicle speed is other than zero.

5. The electric vehicle power storage system according to Claim 4, wherein
the chargeable and dischargeable power of the power storage element row (ROW(1) - ROW (N)) is calculated on the basis of a current that the power storage element row (ROW(1) - ROW(N)) can flow and a total output voltage of the entire power storage element rows (ROW(1) - ROW(N)) connected to the electric load.

6. The electric vehicle power storage system according to Claim 1, wherein
when the vehicle power requirement is zero and the vehicle speed is zero, and when the difference between the set temperature of the air-conditioning apparatus and the cabin temperature is within a predetermined value, the air-conditioning power requirement is set to be larger as a remaining level difference among the power storage element rows (ROW(1) - ROW(N)) increases.

## Patentansprüche

1. Elektrofahrzeug-Energiespeichersystem, das mit mehreren Energiespeicherelement-Zeilen (ROW(l)-ROW(N)) versehen ist, die aus mehreren Energiespeicherelementen (Bat_11, Bat_12, Bat_21, Bat_22) aufgebaut sind, die in Reihe geschaltet sind und auf einem Elektrofahrzeug (101) montiert sind, das Folgendes umfasst:
parallel schaltende Schalter (SW(1)-SW(N)), die mit den Energiespeicherelement-Zeilen (ROW(1)-ROW(N)) jeweils in Reihe geschaltet sind, wobei die Energiespeicherelement-Zeilen (ROW(l)-ROW(N)) parallel angeordnet sind, und jeder parallel schaltende Schalter (SW(1)-SW(N)) konfiguriert ist, die jeweilige Energiespeicherelement-Zeile (ROW(l)-ROW(N)) auszuwählen und mit einer anderen Energiespeicherelement-Zeile (ROW(l)-ROW(N)) parallelzuschalten, und das Schalten und Abschalten bezüglich der Last eines Motors und einer Hilfsmaschine, die auf dem Elektrofahrzeug (101) montiert ist und elektrische Last genannt wird, durchzuführen;
eine Einheit zur Berechnung eines Fahrzeug-Energiebedarfs, die konfiguriert ist, einen Fahrzeug-Energiebedarf zu berechnen;
eine Einheit zum Detektieren eines verbleibendes Niveaus, die konfiguriert ist, ein verbleibendes Niveau der Energiespeicherelement-Zeile, die die aufladbare Energie der Energiespeicherelement-Zeile (ROW(1)-ROW(N)) anzeigt, zu detektieren;
eine Einheit zum Detektieren von Spannung, die konfiguriert ist, eine Spannung der Energiespeicherelement-Zeile (ROW(l)-ROW(N)) zu detektieren; und
eine Energiespeichersystem-Steuervorrichtung, die konfiguriert ist, den parallel schaltenden Schalter (SW(1)-SW(N)) basierend auf dem Fahrzeug-Energiebedarf, dem verbleibenden Niveau der Energiespeicherelement-Zeile und der Spannung der Energiespeicherelement-Zeile (ROW(l)-ROW(N)) zu steuern;
wobei die Energiespeichersystem-Steuervorrichtung die Energiespeicherelement-Zeilen (ROW(1)-ROW(N)) mit der elektrischen Last in der absteigenden Reihenfolge hinsichtlich des verbleibenden Niveaus verbindet, wenn der Fahrzeug-Energiebedarf größer oder gleich Null ist, und
dann, wenn der Fahrzeug-Energiebedarf kleiner als Null ist, die Energiespeicherelement-Zeilen (ROW(l)-ROW(N)) mit der elektrischen Last in aufsteigender Reihenfolge hinsichtlich des verbleibenden Niveaus verbunden werden;
**dadurch gekennzeichnet, dass**
die Einheit zur Berechnung des Fahrzeug-Energiebedarfs den Fahrzeug-Energiebedarf unter Verwendung eines Fahrzeug-Energiebedarfs, der von der Energiespeichersystem-Steuervorrichtung basierend auf einer Drehmomentanforderung von dem Fahrer und der Zahl von Motorumdrehungen berechnet wird, und eines Klimaanlagen-Energiebedarfs berechnet, der unter Verwendung einer eingestellten Temperatur einer Klimaanlage (107), einer Kabinentemperatur und/oder einer Fahrzeuggeschwindigkeit berechnet wird;
das Elektrofahrzeug-Energiespeichersystem ferner eine Einheit zur Berechnung der Drehmomentanforderung, die konfiguriert ist, die Drehmomentanforderung des Fahrers basierend auf der Häufigkeit des Drückens eines Fahrpedals oder eines Bremspedals durch den Fahrer zu berechnen, und eine Einheit zum Detektieren der Motordrehzahl umfasst, die konfiguriert ist, die Drehzahl zu detektieren;
wobei dann, wenn der Fahrzeug-Energiebedarf von Null verschieden ist und die Fahrzeuggeschwindigkeit von Null verschieden ist, der Klimaanlagen-Energiebedarf kleiner eingestellt wird als eine Varianz des verbleibenden Niveaus der gesamten Energiespeicherelement-Zeilen ansteigt.

2. Elektrofahrzeug-Energiespeichersystem nach Anspruch 1, wobei
die Energiespeicherelement-Zeile (ROW(1)-ROW(N)), die mit der elektrischen Last verbunden werden soll, aus den Energiespeicherelementen (Bat_11, Bat_12, Bat_21, Bat_22) ausgewählt wird, in denen eine Differenz zwischen einer Gesamtspannung der Energiespeicherelement-Zeile, die mit der elektrischen Last bereits verbunden ist und der Spannung der Energiespeicherelement-Zeile, kleiner als ein vorbestimmter Wert ist.

3. Elektrofahrzeug-Energiespeichersystem nach Anspruch 2, wobei
die Energiespeicherelement-Zeile (ROW(1)-ROW(N)), die mit der elektrischen Last verbunden werden soll, aus den Energiespeicherelement-Zeilen (ROW(1)-ROW(N)) ausgewählt wird, deren verbleibende Niveaus der zu verbindenden Energiespeicherelement-Zeile größer sind als ein vorbestimmter unterer Grenzwert, wenn der Fahrzeug-Energiebedarf größer als Null ist, und aus den Energiespeicherelement-Zeilen (ROW(1)-ROW(N)) ausgewählt wird, deren verbleibende Niveaus der zu verbindenden Energiespeicherelement-Zeile (ROW(l)-ROW(N)) kleiner als ein vorbestimmter oberer Grenzwert sind, wenn der Fahrzeug-Energiebedarf kleiner als Null ist.

4. Elektrofahrzeug-Energiespeichersystem nach Anspruch 1, wobei
die Energiespeichersystem-Steuervorrichtung die Energiespeicherelement-Zeilen (ROW(l)-ROW(N)) durch die Zahl der erforderlichen Verbindungen der Energiespeicherelement-Zeile (ROW(l)-ROW(N)) oder weniger mit der elektrischen Last basierend auf dem Fahrzeug-Energiebedarf und einer aufladbaren und einer entladbaren Energie der Energiespeicherelement-Zeilen (ROW(l)-ROW(N)) verbindet, wenn der Fahrzeug-Energiebedarf von Null verschieden ist und die Fahrzeuggeschwindigkeit von Null verschieden ist.

5. Elektrofahrzeug-Energiespeichersystem nach Anspruch 4, wobei
die aufladbare und die entladbare Energie der Energiespeicherelement-Zeile (ROW(l)-ROW(N)) basierend auf einem Strom, den die Energiespeicherelement-Zeile (ROW(1)-ROW(N)) fließen lassen kann, und einer Gesamtausgabespannung der gesamten Energiespeicherelement-Zeilen (ROW(1)-ROW(N)), die mit der elektrischen Last verbunden sind, berechnet werden.

6. Elektrofahrzeug-Energiespeichersystem nach Anspruch 1, wobei
dann, wenn der Fahrzeug-Energiebedarf Null ist und die Fahrzeuggeschwindigkeit Null ist, und dann, wenn die Differenz zwischen der eingestellten Temperatur der Klimaanlage und der Kabinentemperatur innerhalb eines vorgegebenen Wertes ist, der Klimaanlagen-Energiebedarf größer eingestellt wird als eine verbleibende Niveaudifferenz zwischen den Energiespeicherelement-Zeilen (ROW(1)-ROW(N)) ansteigt.

## Revendications

1. Système de stockage de puissance pour véhicule électrique pourvu d'une pluralité de rangées d'éléments de stockage de puissance (ROW(1) - ROW(N)) composées d'une pluralité d'éléments de stockage de puissance (Bat_11, Bat_12, Bat_21, Bat_22) connectés en série et montés sur un véhicule électrique (101), comprenant :
des commutateurs de connexion parallèles (SW(1) - SW(N)) respectivement connectés en série aux rangées d'éléments de stockage de puissance (ROW(1) - ROW(N)), les rangées d'éléments de stockage de puissance (ROW(1) - ROW(N)) étant disposées en parallèle et chaque commutateur de connexion parallèle (SW(1) - SW(N)) étant configuré pour sélectionner la rangée d'éléments de stockage de puissance (ROW(1) - ROW(N)) respective et être connecté en parallèle à une autre rangée d'éléments de stockage de puissance (ROW(1) - ROW(N)), et effectuer la connexion et la déconnexion par rapport à des charges d'un moteur et une machine auxiliaire montée sur le véhicule électrique (101) désignées par charge électrique,
une unité de calcul de demande de puissance de véhicule configurée pour calculer une demande de puissance de véhicule ;
une unité de détection de niveau restant configurée pour détecter un niveau restant de la rangée d'éléments de stockage de puissance indiquant la puissance chargeable de la rangée d'éléments de stockage de puissance (ROW(1) - ROW(N)) ;
une unité de détection de tension configurée pour détecter une tension de la rangée d'éléments de stockage de puissance (ROW(1) - ROW(N)) ; et
un appareil de commande de système de stockage de puissance configuré pour commander le commutateur de connexion parallèle (SW(1) - SW(N)) sur la base de la demande de puissance de véhicule, du niveau restant de la rangée d'éléments de stockage de puissance et de la tension de la rangée d'éléments de stockage de puissance (ROW(1) - ROW(N)) ;
dans lequel l'appareil de commande de système de stockage de puissance connecte les rangées d'éléments de stockage de puissance (ROW(1) - ROW(N)) à la charge électrique dans l'ordre descendant en termes de niveau restant lorsque la demande de puissance de véhicule est égale ou supérieure à zéro, et
lorsque la demande de puissance de véhicule est inférieure à zéro, les rangées d'éléments de stockage de puissance (ROW(1) - ROW(N)) sont connectées à la charge électrique dans l'ordre ascendant en termes de niveau restant ;
**caractérisé en ce que**
l'unité de calcul de demande de puissance de véhicule calcule la demande de puissance de véhicule en utilisant une demande de puissance de véhicule calculée par l'appareil de commande de système de stockage de puissance sur la base d'une demande de couple par le conducteur et du nombre de tours du moteur ; et une demande de puissance de climatisation calculée en utilisant au moins une grandeur parmi une température réglée d'un appareil de climatisation (107), une température de l'habitacle et une vitesse de véhicule ;
le système de stockage de puissance pour véhicule électrique comprenant en outre une unité de calcul de demande de couple configurée pour calculer la demande de couple d'un conducteur sur la base de quantités d'appui d'une pédale d'accélérateur et d'une pédale de frein par le conducteur, et une unité de détection de nombre de tours du moteur configurée pour détecter le nombre de tours du moteur ;
dans lequel, lorsque la demande de puissance est différente de zéro et la vitesse de véhicule est différente de zéro, la demande de puissance de climatisation est réglée pour diminuer à mesure qu'une variance du niveau restant des rangées entières d'éléments du stockage de puissance augmente.

2. Système de stockage de puissance pour véhicule électrique selon la revendication 1, dans lequel
la rangée d'éléments de stockage de puissance (ROW(1) - ROW(N)) à connecter à la charge électrique est sélectionnée parmi les éléments de stockage de puissance (Bat_11, Bat_12, Bat_21, Bat_22) dans lesquels une différence entre une tension totale de la rangée d'éléments de stockage de puissance déjà connectée à la charge électrique et la tension de la rangée d'éléments de stockage de puissance est inférieure à une valeur prédéterminée.

3. Système de stockage de puissance pour véhicule électrique selon la revendication 2, dans lequel
la rangée d'éléments de stockage de puissance (ROW(1) - ROW(N)) à connecter à la charge électrique est sélectionnée parmi les rangées d'éléments de stockage de puissance (ROW(1) - ROW(N)) dont les niveaux restants de la rangée d'éléments de stockage de puissance à connecter sont supérieurs à une valeur limite inférieure prédéterminée lorsque la demande de puissance de véhicule est supérieure à zéro, et est sélectionnée parmi les rangées d'éléments de stockage de puissance (ROW(1) - ROW(N)) dont les niveaux restants de la rangée d'éléments de stockage de puissance (ROW(1) - ROW(N)) à connecter sont inférieurs à une valeur limite supérieure prédéterminée lorsque la demande de puissance de véhicule est inférieure à zéro.

4. Système de stockage de puissance pour véhicule électrique selon la revendication 1,
dans lequel le dispositif de commande de système de stockage de puissance connecte les rangées d'éléments de stockage de puissance (ROW(1) - ROW(N)) par le nombre de connexions de rangée d'éléments de stockage de puissance (ROW(1) - ROW(N)) requises ou moins à la charge électrique sur la base de la demande de puissance de véhicule et d'une puissance chargeable et déchargeable des rangées d'éléments de stockage de puissance (ROW(1) - ROW(N)) lorsque la demande de puissance de véhicule est différente de zéro et la vitesse de véhicule est différente de zéro.

5. Système de stockage de puissance pour véhicule électrique selon la revendication 4,
dans lequel la puissance chargeable et déchargeable de la rangée d'éléments de stockage de puissance (ROW(1) - ROW(N)) est calculée sur la base d'un courant que la rangée d'éléments de stockage de puissance (ROW(1) - ROW(N)) peut faire circuler et d'une tension de sortie totale des rangées entières d'éléments de stockage de puissance (ROW(1) - ROW(N)) connectées à la charge électrique.

6. Système de stockage de puissance pour véhicule électrique selon la revendication 1, dans lequel,
lorsque la demande de puissance de véhicule est égale à zéro et la vitesse de véhicule est égale à zéro, et lorsque la différence entre la température réglée de l'appareil de climatisation et la température de l'habitacle se situe à l'intérieur d'une valeur prédéterminée, la demande de puissance de climatisation est réglée pour augmenter à mesure qu'une différence de niveau restante entre les rangées d'éléments de stockage de puissance (ROW(1) - ROW(N)) augmente.
